# EUROPÄISCHE PATENTSCHRIFT

(11) **EP 1 238 558 B1**
(45) Veröffentlichungstag und Bekanntmachung des Hinweises auf die Patenterteilung: **08.09.2004**
(21) Anmeldenummer: 00987053.6
(22) Anmeldetag: 01.11.2000
(51) Int. Cl.: H04Q 7/38

(54) **VERFAHREN ZUR ÜBERTRAGUNG VON DATEN MITTELS FUNKÜBERTRAGUNGSSYSTEMEN ZWISCHEN SENDE-/EMPFANGSSTATIONEN UND RECHNER ZUR ZUORDNUNG VON FUNKÜBERTRAGUNGSSYSTEMEN FÜR EINE ÜBERTRAGUNG VON DATEN ZWISCHEN SENDE-/EMPFANGSSTATIONEN**
METHOD FOR TRANSMITTING DATA BETWEEN MASTER/SLAVE STATIONS BY MEANS OF RADIO TRANSMISSION SYSTEMS AND COMPUTER FOR THE ALLOCATION OF RADIO TRANSMISSION SYSTEMS FOR THE TRANSMISSION OF DATA BETWEEN MASTER/SLAVE STATIONS
PROCEDE DE TRANSMISSION DE DONNEES A L'AIDE DE SYSTEMES DE TRANSMISSION RADIO ENTRE DES STATIONS D'EMISSION/RECEPTION ET ORDINATEUR DESTINE A L'ASSIGNATION DE SYSTEMES DE TRANSMISSION RADIO POUR UNE TRANSMISSION DE DONNEES ENTRE LESDITES STATIONS

(30) Priorität: 30.11.1999 DE 19957642
(43) Veröffentlichungstag der Anmeldung: 11.09.2002
(73) Patentinhaber: ROBERT BOSCH GMBH, 70442 Stuttgart (DE)
(72) Erfinder: BRANDES, Axel, 31246 Lahstedt (DE); KYNAST, Andreas, 31139 Hildesheim (DE); RUF, Michael, 76316 Malsch-Völkersbach (DE); PÖCHMÜLLER, Werner, 31139 Hildesheim (DE); MANN PELZ, Rodolfo, 30175 Hannover (DE)
(86) Internationale Anmeldenummer: PCT/DE2000/003834
(87) Internationale Veröffentlichungsnummer: WO 2001/041488

(56) Entgegenhaltungen:
- US-A- 5 802 502
- US-A- 5 854 985
- LAUTERBACH T ET AL: "MOBILE INTERAKTIVE MULTIMEDIA-DIENSTE AUF GRUNDLAGE DES DAB/GSM-SYSTEMS" NTG FACHBERICHTE,VDE VERLAG, BERLIN,,DE, Nr. 144, 1997, Seiten 161-166, XP000973231 ISSN: 0341-0196

## Beschreibung

### Stand der Technik

Die Erfindung geht aus von einem Verfahren zur Übertragung von Daten mittels Funkübertragungssystemen zwischen Sende/Empfangsstationen bzw. einem Rechner zur Zuordnung von Funkübertragungssystemen für eine Übertragung von Daten zwischen Sende-/Empfangsstationen nach der Gattung der unabhängigen Patentansprüche.

Es ist bereits aus Thomas Lauterbach und Matthias Unbehaun: Multimedia Environments for Mobiles (Memo) Interactive Multimedia Services for Portable and Mobile Terminals, Proceedings ACTS Mobile Summit 97, Aalborg, Seite 581 bis 586, Oktober 1997 bekannt, daß eine Kombination aus GSM (Global System for Mobile Communications) mit DAB (Digital Audio Broadcasting) implementiert wird. Der Zweck ist, daß das niederratige GSM für einen Anforderungskanal verwendet wird, während das höherratige DAB zur Bereitstellung der angeforderten Daten eingesetzt wird. Damit sollen sogenannte Client-Server-Anwendungen in einem Kraftfahrzeug ermöglicht werden. Beide Funkübertragungssysteme GSM und DAB müssen vorhanden sein, und es existiert eine feste Zuordnung für die Kanäle.

In US-5,854,985 A wird ein Schaltkreis beschrieben, der beispielsweise in einem Mobiltelefon oder einem anderen Endgerät angeordnet ist, der nach vorgegebenen Kriterien eine Optimierung der Funkverbindungen für den Nutzer durchführt.

### Vorteile der Erfindung

Das erfindungsgemäße Verfahren zur Übertragung von Daten bzw. der erfindungsgemäße Rechner zur Zuordnung von Funkübertragungssystemen hat demgegenüber den Vorteil, daß für einen Nutzer eine flexible Zuordnung von Funkübertragungssystemen nach verschiedenen Kriterien vorgenommen wird. Dabei wird auch berücksichtigt, welche Funkübertragungssysteme für den Nutzer an seinem jeweiligen Standort zur Verfügung stehen und mit welcher Geschwindigkeit sich eine Sende-/Empfangsstation fortbewegt.

Für die Betreiber der verschiedenen Funkübertragungssysteme bietet sich daher ein größerer Kundenkreis, der je nach Auslastung der einzelnen Funkübertragungssyteme verteilt wird. Insbesondere, wenn ein Funkübertragungssystem sehr stark belastet ist, kann auch ein alternatives Funkübertragungssystem weitergeleitet werden, sofern das alternative Funkübertragungssystem vorhanden ist.

Für den Nutzer von Funkübertragungssystemen werden dabei Kosten, Übertragungsqualität und die Verfügbarkeit eines Funkübertragungssystems optimiert. Dabei ist es für den Nutzer auch möglich, nun sogenannte End-to-End-Verbindungen, die auf Internet Protokollen basieren zu nutzen, wobei verschiedene Funkübertragungssysteme verwendet werden.

Durch die in den abhängigen Ansprüchen aufgeführten Maßnahmen sind vorteilhafte Weiterbildungen und Verbesserungen des in den unabhängigen Ansprüchen angegebenen Verfahrens bzw. Rechners möglich.

Es ist insbesondere von Vorteil, daß das Teilnehmerprofil von der mobilen Sende-/Empfangsstation zu dem Rechner übertragen wird, so daß das Teilnehmerprofil immer dem neuesten Stand entspricht.

Dabei ist es von Vorteil, daß die Daten über das Teilnehmerprofil und die Übertragungsqualität über eine Rückwärtsstrecke von der mobilen Sende-/Empfangsstation zu dem Rechner übertragen werden, so daß eine Signalisierung dazu benutzt wird, diese Daten zur Funkübertragungssystemauswahl zu nutzen.

Weiterhin ist es von Vorteil, daß das Teilnehmerprofil den Standort der mobilen Sende-/Empfangsstation und deren Geschwindigkeit angibt. Damit werden für die Funkübertragungssystemauswahl wichtige Daten in das Teilnehmerprofil aufgenommen.

Besonders vorteilhaft ist, daß die Übertragungsqualität mittels einer Signalfeldstärke und/oder Fehlerrate gemessen wird. Diese Parameter sind sehr einfach zu messen und erlauben eine eindeutige Aussage über die Übertragungsqualität eines Funkübertragungssystems.

Weiterhin ist es von Vorteil, daß der Standort einer Sende/Empfangsstation mittels einer Ortungsvorrichtung ermittelt wird, so daß für diesen Standort eine Auslastung des Funkübertragungssystems bestimmt wird und gegebenenfalls eine bestehende Verbindung auf ein anderes Funkübertragungssystem umgeleitet wird, um ein überlastetes Funkübertragungssystem zu entlasten.

Darüber hinaus ist es von Vorteil, daß ein Teilnehmerprofil angibt, welchen Preis ein Kunde bereit ist für eine Übertragung von Daten zu bezahlen, welche Qualität er für die Übertragung fordert und welche Übertragungsrate er benötigt. Damit kann in einfacher Weise nach den Wünschen eines Kunden ein entsprechendes Funkübertragungssystem eingesetzt werden.

Des weiteren ist es von Vorteil, daß die Geschwindigkeit einer Sende-/Empfangseinrichtung von Fahrzeugsensoren oder mittels der Funksignale selbst bestimmt wird. Die Geschwindigkeitsbestimmung ist insbesondere für die Auswahl von Funkübertragungssystemen wichtig, da verschiedene Funkübertragungssysteme für unterschiedliche Geschwindigkeiten geeignet sind.

Weiterhin ist es von Vorteil, daß während einer bestehenden Übertragung von Daten mittels eines ersten Funkübertragungssystems aufgrund einer Änderung von Parametern diese Übertragung auf ein zweites Funkübertragungssystem umgeleitet wird, so daß kein Verlust bei der Übertragung der Daten für den Kunden auftritt.

Darüber hinaus ist es von Vorteil, daß der erfindungsgemäße Rechner ein Teil einer Vermittlungseinrichtung ist und damit leicht integrierbar in solche Systeme ist. Dies ermöglicht einen kostengünstigen und einfachen Einbau dieser zusätzlichen Funktion der Zuordnung von unterschiedlichen Funkübertragungssystemen.

In einer Weiterbildung der Erfindung ist vorgesehen, daß der Rechner Teil der mobilen Sende-/Empfangsstation selbst ist. Dies ist insbesondere für einen Nutzer der mobilen Sende/Empfangsstation interessant, da dann der Rechner ihm zur Verfügung steht und von keinem Dritten betrieben wird.

### Zeichnung

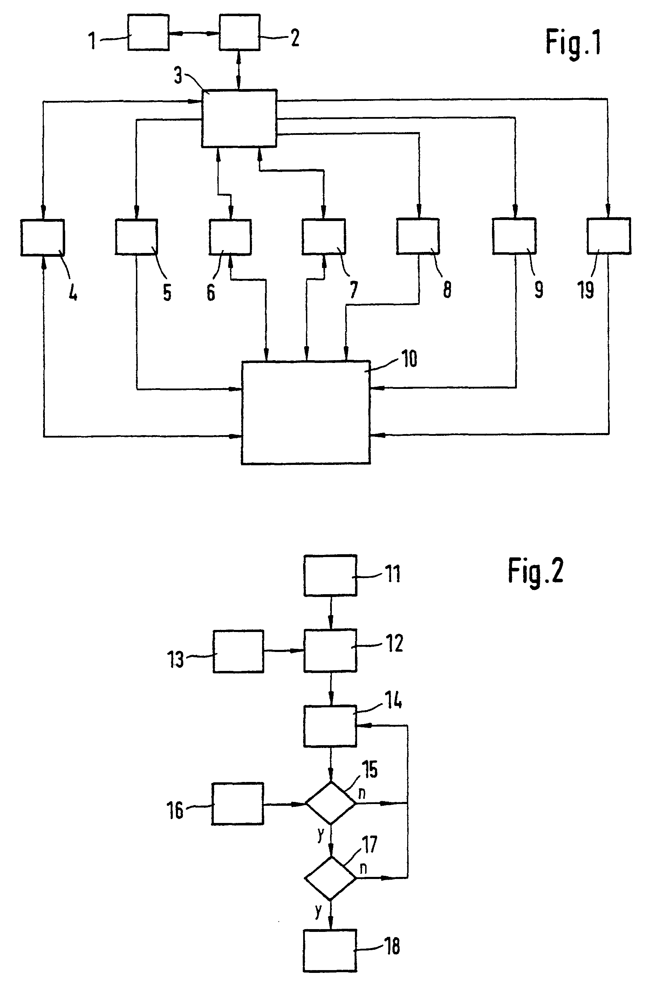

Ausführungsbeispiele der Erfindung sind in der Zeichnung dargestellt und in der nachfolgenden Beschreibung näher erläutert. Es zeigen Figur 1 ein Schema von verfügbaren Funkübertragungssystemen für eine Sende-/Empfangsstation und Figur 2 das erfindungsgemäße Verfahren zur Übertragung von Daten.

### Beschreibung

Es bestehen bereits nebeneinander verschiedene terrestrische und satellitenbasierte Funkübertragungssysteme, wobei in Zukunft noch weitere solcher Funkübertragungssysteme hinzukommen werden. Darüber hinaus liegen funkbasierte Ortungssysteme, wie es GPS (Global Positioning System) ist, vor.

Diese einzelnen Funkübertragungssysteme stellen ein heterogenes Funknetz dar, wobei die einzelnen Funkübertragungssysteme jeweils für einen bestimmten Nutzer vorteilhafte Charakteristika aufweisen. Zu solchen vorteilhaften Charakteristika gehören eine entsprechende Bandbreite, für den Kunden attraktive Kosten, eine vorgegebene Fehlerrate und eine bestimmte Übermittlungsart. Bei der Übermittlungsart bietet sich z.B. eine Übertragung an mit variabler Übertragungsrate oder eine Übermittlungsart mit fester Übertragungsrate an.

Daneben ist es auch möglich, daß verschiedene Übermittlungsarten verschiedene Prioritäten aufweisen. Sprachdaten werden eine hohe Priorität aufweisen, während andere Daten, wie Textdaten, eine niedrige Priorität aufweisen. Dies ergibt sich daraus, daß Sprachdaten und auch Videodaten gegenüber Zeitverzögerungen im Hinblick auf ihre Wiedergabequalität sehr empfindlich sind. Ein Telefongespräch oder eine Videosequenz würde als qualitativ schlecht empfunden werden, wenn einzelne Daten mit unterschiedlich langen Verzögerungen wiedergegeben würden, wobei die Verzögerungen allein auf Verzögerungen während der Übertragung zurückzuführen sind. Daher sind solche Daten mit einer hohen Priorität zu kennzeichnen, damit sie bevorzugt vor anderen Daten, wie Textdaten, übertragen werden. Bei Textdaten wird einfach darauf gewartet, bis das komplette Dokument übertragen wurde. Solche Gegebenheiten sind von dem World Wide Web (WWW) wohl bekannt, wobei Nutzer auch darauf warten, bis die von ihnen angewählten Seiten voll übertragen werden.

Angesichts dieser heterogenen Funknetzstruktur ist es ein Ziel, sowohl den Kunden als auch den Funknetzbetreibern einen optimalen Nutzen zu bieten, indem die Vorteile der einzelnen Funkübertragungssysteme kombiniert werden.

Es handelt sich bei den Funknetzen um zwei verschiedene Typen:
1. Mobilfunknetze mit Duplexbetrieb. Dazu gehören GSM, UMTS (Universal Mobile Telecommunication System) und andere satellitenbasierte Mobilfunknetze wie Iridium. Bei diesen Mobilfunknetzen liegt ein Hin- und Rückkanal vor. Bei UMTS gibt es eine terrestrische und eine satellitenbasierte Version. Terrestrische Versionen von Mobilfunknetzen weisen eine kleine Zellengröße auf, während satellitenbasierte Systeme eine größere Fläche abdecken. Ein Vorteil der Mobilfunkübertragungssysteme ist, daß eine Kommunikation zwischen zwei Stationen möglich ist. GSM weist zur Zeit eine vergleichsweise geringe Übertragungsrate auf, aber im Moment vorgesehene Erweiterungen dieses Standards führen zu erheblich höheren Übertragungsraten. Mobilfunknetze weisen eine Vorwärtstrecke (engl. Downlink) und eine Rückwärtsstrecke (engl. Uplink) auf. Die Vorwärtstrecke bezeichnet die Funkübertragung von einer Basisstation zu einer mobilen Sende-/Empfangsstation und die Rückwärtsstrecke die Funkübertragung von der mobilen Sende/Empfangsstation zu der Basisstation.
2. Rundfunkverteilsysteme. Dazu gehören DAB, DVB (Digital Video Broadcasting) und DRM (Digital Radio Mondial). Das sind digitale Rundfunkverteilsysteme, die neben digitalen Audiodaten auch die Möglichkeit aufweisen, Multimediadaten mit hohen Übertragungsraten zu übertragen. Hier sind insbesondere DAB, DVB und DRM für den mobilen Empfang geeignet, weil zu übertragende Signale auf viele Frequenzen verteilt werden, so daß eine frequenzselektive Dämpfung, die bei Funkübertragungen in der Atmosphäre auftritt, nur eine geringe Auswirkung auf die zu übertragenden Signale hat. Dabei ist es weiterhin möglich, einen verbleibenden Effekt der frequenzselektiven Dämpfung mittels fehlerkorrigierender Codes auszugleichen.

Darüber hinaus weisen DAB und DVB eine im Vergleich zu den Mobilfunkübertragungssystemen große Bandbreite auf. Da die Signale der Rundfunkverteilsysteme von allen geeigneten Empfängern in einem Rundfunkversorgungsgebiet empfangen werden können, ist bei einer individuellen Zuteilung von Informationen für bestimmte Sende-/Empfangsstationen möglich, mittels Verwürfelung oder Verschlüsselung übertragene Informationen nur für bestimmte Nutzer zugänglich zu machen. Rundfunkverteilsysteme weisen nur eine Vorwärtsstrecke auf.

Die Funknetze, die Mobilfunknetze und die Rundfunkverteilsysteme, sind an weitere Kommunikationsnetze, wie es das Internet ist, angebunden. Damit stehen dem Nutzer über eine Verbindung mittels eines Funkübertragungssystems eine Anbindung zum Internet zur Verfügung, um damit die Möglichkeiten dieses Kommunikationsnetzes auszunutzen.

Erfindungsgemäß erhält nun ein Rechner in einer Vermittlungseinrichtung, die den Zugang zu einem Kommunikationsnetz steuert und Daten mittels Funkübertragungssystemen erhält bzw. versendet, von einer Sende-/Empfangsstation Daten, die der Rechner dann auswertet, um der Sende-/Empfangsstation entsprechende Funkübertragungssysteme einer Kommunikation zuzuordnen. Wenn die Sende-/Empfangsstation eine Verbindung anfordert, wird ein Mobilfunkübertragungssystem, also GSM oder UMTS, verwendet.

Figur 1 zeigt ein Schema verfügbarer Funkübertragungssysteme für einen Standort für eine Sende-/Empfangsstation 10, wobei hier nur beispielhaft eine Sende-/Empfangsstation dargestellt wird, es sind weitere Sende-/Empfangsstationen möglich, wobei dann auch eine Kommunikation zwischen den Sende-/Empfangsstationen möglich ist.

Eine Datenquelle 1, die ein Informationsserver ist, ist über einen Ein-/Ausgang, also über ein Modem, mit einem Kommunikationsnetz 2, dem Internet, verbunden, um Daten über das Kommunikationsnetz 2 auszutauschen. Das Kommunikationsnetz 2 ist über einen zweiten Datenein/ausgang mit einer Vermittlungseinrichtung 3 verbunden.

Die Vermittlungseinrichtung 3 weist einen erfindungsgemäßen Rechner auf, um für die Sende-/Empfangsstation 10 ein oder mehrere entsprechende Funkübertragungssysteme für eine Kommunikation zuzuordnen. Die Vermittlungseinrichtung 3 ist über einen ersten Datenein-/ausgang mit einer Einrichtung 4 an das UMTS-S-Netz angeschlossen. Das UMTS-S-Netz ist ein satellitenbasiertes UMTS-System, wobei Satelliten als Basisstationen arbeiten.

Die Verbindung zwischen der Vermittlungseinrichtung 3 und dem UMTS-S-Einrichtung 4 wird leitungsgebunden sein, wobei die Gegenstelle zu der Vermittlungseinrichtung 3 auch eine Vermittlungseinrichtung für das UMTS-S-Netz sein wird. Solch eine Konfiguration gilt auch für die Verbindungen der Vermittlungseinrichtungen 3 zu den anderen Funkübertragungssystemen. Alternativ ist es auch möglich, die Verbindung von der Vermittlungseinrichtung 3 zu den Funkübertragungssystemen als Funkverbindung, beispielsweise als Richtfunkverbindung, auszuführen.

Über einen ersten Datenausgang ist die Vermittlungseinrichtung 3 mit einer DAB-Einrichtung 5 verbunden. Über einen zweiten Datenein/-ausgang ist die Vermittlungseinrichtung 3 mit einer GSM-Einrichtung 6 verbunden. Über einen dritten Datenein-/ausgang ist die Vermittlungseinrichtung 3 mit einer UMTS-T-Einrichtung 7 verbunden. Über einen zweiten Datenausgang ist die Vermittlungseinrichtung 3 mit einer DVB-T-(terrestrisch)-Einrichtung 8 verbunden und über einen dritten Datenausgang ist die Vermittlungseinrichtung 3 mit einer DVB-S-(Satellit)-Einrichtung 9 verbunden. Schließlich ist die Vermittlungseinrichtung 3 über einen vierten Datenausgang an eine DRM-Einrichtung 19 angeschlossen.

Die Vermittlungseinrichtung 3 sendet und empfängt Daten zu und von der UMTS-S-Einrichtung 4, der GSM-Einrichtung 6 und der UMTS-T-Einrichtung 7. Die Vermittlungseinrichtung 3 überträgt nur Daten zu der DAB-Einrichtung 5, der DVB-T-Einrichtung 8, der DVB-S-Einrichtung 9 und der DRM-Einrichtung 19. Dabei werden hier also entweder von über das Internet 2 empfangene Daten übertragen oder die mittels der Funkübertragungssysteme UMTS-S 4, GSM 6 oder UMTS-T 7 empfangen wurden, gesendet.

Die UMTS-S-Einrichtung 4 ist über einen Funkkanal mit der Sende-/Empfangsstation 10 verbunden, wobei von der UMTS-S-Einrichtung 4 und von der Sende-/Empfangsstation 10 gesendet und empfangen wird. Die DAB-Einrichtung 5 ist über einen Funkkanal mit der Sende-/Empfangsstation 10 verbunden, wobei die DAB-Einrichtung 5 sendet und die Sende/-Empfangseinrichtung 10 nur empfängt. Die GSM-Einrichtung 6 ist über einen Funkkanal mit der Sende-/Empfangsstation 10 verbunden, wobei in beiden Richtungen gesendet und empfangen wird. Das gleiche gilt für die Funkverbindung zwischen der UMTS-T-Einrichtung 7 und der Sende-/Empfangsstation 10. Die Sende-/Empfangsstation 10 ist weiterhin über Funkkanäle mit der DVB-T-Einrichtung 8, der DVB-S-Einrichtung 9 und der DRM-Einrichtung 19 verbunden, wobei die Sende/Empfangsstation 10 von der DVB-T-Einrichtung 8, der DVB-S-Einrichtung 9 und der DRM-Einrichtung 19 nur Daten empfängt.

Wenn die Sende-/Empfangsstation 10 eine Übertragung über ein Funkübertragungssystem vornehmen möchte, wird es zunächst über einen Funkkanal, einer Rückwärtsstrecke, mit einem Mobilfunkübertragungssystem beginnen, um eine Signalisierung durchzuführen und eine Verbindung aufzubauen, denn nur mit dem Mobilfunkübertragungssystem ist es möglich, Daten von der Sende-/Empfangsstation 10 zu der Vermittlungseinrichtung 3 zu übertragen. Als Mobilfunkübertragungssystem bieten sich das UMTS-S, das GSM und das UMTS-T an.

Bei der Signalisierung wird von der Sende-/Empfangsstation 10 ein Teilnehmerprofil, die Daten über eine vom Teilnehmer geforderte Dienstgüte aufweist, gesendet. Dazu gehören die Übertragungsrate, eine zulässige Fehlerrate, maximale Kosten, die der Teilnehmer für eine Übertragung aufwenden möchte, und ob er z.B. Sprachdaten oder andere Daten, insbesondere eine zu übertragende Datenmenge, übertragen möchte. Die Art der Daten hat einen Einfluß, welche spezifischen Merkmale eines Funkübertragungssystems von Vorteil für eine Übertragung sind. Dazu gehört die Vermittlungsart, eine zulässige Verzögerung der übertragenen Signale und eine Paketgröße.

Weiterhin überträgt die Sende-/Empfangsstation 10 mittels des Teilnehmerprofils ihren Standort über den Funkkanal. Den Standort ermittelt die Sende-/Empfangsstation 10 mittels einer eingebauten Ortungsvorrichtung, wie es ein GPS-System ist, oder mittels des jeweiligen Mobilfunkübertragungssystems kann der Standort der Sende/Empfangsstation 10 angegeben werden, da die Sende/Empfangsstation 10 sich in einer Funkzelle des Mobilfunkübertragungssystems angemeldet hat. Dies ist für die Auswahl der Funkübertragungssysteme wichtig, da dann die lokale Netzauslastung der dort vorhandenen Netze in die Auswahl eingeht.

Als ein weiteres Datum überträgt die Sende-Empfangsstation 10 mittels des Teilnehmerprofils ihre momentane Geschwindigkeit, denn die Geschwindigkeit bestimmt, welche Funkübertragungsverfahren geeignet sind, um eine robuste Datenübertragung zu ermöglichen. Die Geschwindigkeit wird mittels Sensoren, in einem Kraftfahrzeug ein Tachometer, oder aus den Funksignalen selbst bestimmt. Dies ist insbesondere für Sende-/Empfangsstationen geeignet, die in Fahrzeugen betrieben werden.

So wird DVB bei niedrigen Geschwindigkeiten oder gar Stillstand zu bevorzugen sein, während DAB, GSM und UMTS für hohe Geschwindigkeiten geeignet sind. DVB und DAB bieten jedoch eine höhere Übertragungsrate.

Weiterhin überträgt die Sende-/Empfangsstation 10 über das Funknetz zu der Vermittlungseinrichtung 3 mit dem Teilnehmerprofil ein vorliegendes Endgeräteprofil, d.h. über welche Funknetzübertragungssysteme ist die Sende/Empfangsstation 10 in der Lage, zu empfangen und/oder zu senden.

Die jeweilige Funkübertragungssystemeinrichtung, die diese Daten von der Sende-/Empfangsstation 10 empfangen hat, leitet diese weiter an die Vermittlungseinrichtung 3, so daß der darin befindliche Rechner die entsprechenden Funkübertragungssysteme dieser Sende-/Empfangsstation 10 zuordnet. Der Rechner wird das Funkübertragungssystem mit der höchsten Übertragungsrate für die Übertragung der Daten auswählen, sofern Verfügbarkeit des Funkübertragungssystem, zu erwartende Kosten für die Übertragung der Daten und die Geschwindigkeit der Sende-/Empfangsstation dies gestatten.

Mit dem Teilnehmerprofil ist eine Kennzeichnung der Sende/Empfangsstation 10 verbunden, die für die jeweiligen Funkübertragungssysteme die Identifikation erlaubt. Diese Kennung ist eine Nummer, welche die Mobilfunkübertragungssysteme wie GSM oder UMTS als Identifikation einer Mobilstation annehmen.

Fällt die Übertragungsqualität bei einem von der Sende/Empfangsstastion 10 verwendeten Funkübertragungssystem stark ab, wird automatisch eine Weiterleitung (engl. Handover) an ein alternatives Funkübertragungssystem durchgeführt, falls dieses möglich ist. Eine jeweilige Einrichtung eines Funkübertragungssystems meldet dies der Vermittlungsstation 3, so daß der Rechner die nächste Alternative für die Sende-/Empfangsstation 10 verwendet und damit die Weiterleitung veranlaßt.

In Figur 2 ist das erfindungsgemäße Verfahren zur Übertragung von Daten dargestellt. Im Teilnehmerprofil sind die Daten enthalten, wie es oben beschrieben wurde.

In Verfahrensschritt 11 möchte die Sende-/Empfangsstation 10 eine Kommunikation über ein Funkübertragungssystem durchführen, so daß eine Verbindung zwischen der Sende/Empfangsstation 10 und einer Einrichtung eines Funkübertragungssystems aufgebaut wird.

In Verfahrensschritt 12 übermittelt die Sende/Empfangsstation 10 ihr Teilnehmerprofil einer Funkübertragungssystemeinrichtung, wobei die Standortbestimmung als Datum des Teilnehmerprofils mitgesendet wird. In Verfahrensschritt 13 wird mittels einer Ortungsvorrichtung der Standort der Sende-/Empfangsstation festgestellt. In Verfahrensschritt 14 berechnet der Rechner in der Vermittlungseinrichtung 3, welches anhand des Teilnehmerprofils der billigste Dienst eines Funkübertragungssystems ist und wählt diesen Dienst aus, sofern Verfügbarkeit und Geschwindigkeit der Sende/Empfangsstation dies gestatten. Die Kommunikation wird also mittels dieses Funkübertragungssystems durchgeführt.

In Verfahrensschritt 15 überprüft die Sende-/Empfangsstation 10 und die jeweilige Funkübertragungssystemeinrichtung die aktuelle Fehlerrate des verwendeten Funkübertragungssystems und die Sende-/Empfangsstation 10 darüber hinaus die aktuelle Geschwindigkeit als weiteres Element des Teilnehmerprofils. Dies wird der Vermittlungseinrichtung 3 übermittelt, so daß der Rechner anhand dieser aktuellen Daten überprüft, ob das ausgewählte Funkübertragungssystem immer noch den Kriterien des Teilnehmerprofils entspricht. Ist das nicht mehr der Fall, so wird ein neues Funkübertragungssystem in Verfahrensschritt 14 ausgewählt.

Sind jedoch die Fehlerrate und die Geschwindigkeit immer noch so, daß das im Moment verwendete Funkübertragungssystem den Kriterien entspricht, wird in Verfahrensschritt 17 die Netzauslastung durch die jeweilige Funkübertragungssystemeinrichtung überprüft. Ist die Netzauslastung so groß, daß Qualitätseinbußen bei der Datenübertragung hingenommen werden müssen, z.B. eine sehr große Zeitverzögerung, dann wird dies der Vermittlungseinrichtung 3 übermittelt, so daß in Verfahrensschritt 14 ein neues Funkübertragungssystem, das auch den Kriterien des Teilnehmerprofils entspricht, festgelegt. Passiert dies während einer Datenübertragung, dann wird der Datenstrom, der zwischen der Sende/Empfangsstation 10 und der jeweiligen Funkübertragungssystemeinrichtung ausgetauscht wird an das neue Funkübertragungssysstem weitergeleitet, so daß kein Datenverlust auftritt. In Verfahrensschritt 18 endet das Verfahren.

In Figur 1 ist dargestellt, wie Daten von einer Datenquelle über das Netz und über die Übermittlung mittels eines Funkübertragungssystems zu einer Sende-/Empfangsstation 10, die sich in einem Fahrzeug befindet, gelangen. Alternativ ist auch die Kommunikation zwischen mehreren Sende/Empfangsstationen, die mobil sind, möglich. Dabei geht dann der Datenstrom von einer Sende-/Empfangsstation über ein Funkübertragungssystem zu der Vermittlungseinrichtung 3 und dann zu einem weiteren oder dem gleichen Funkübertragungssystem zu der anderen Sende/Empfangsstation.

Die Übertragungsqualität wird anhand entweder der Signalfeldstärke und einer Fehlerrate bei empfangenen Daten ermittelt. Die Signalfeldstärke wird mittels einer Leistungsmessung oder einer Amplitudenmessung ermittelt, während die Fehlerrate durch Fehlererkennungsverfahren berechnet wird. zu diesen Fehlererkennungsverfahren gehören entweder fehlerkorrigierende und/oder fehlererkennende Codes, wie Blockcodes oder Faltungscodes oder es können auch Prüfsummen, die englisch als Cyclic Redundancy Code bezeichnet werden, verwendet werden.

Bietet ein Funkübertragungssystem selbst verschiedene Freiheitsgrade, wie verschiedene Frequenzbänder oder Polaristationsebenen, dann ist es dem Rechner in der Vermittlungseinrichtung 3 weiterhin möglich, auch diese Parameter für eine Optimierung einer Funkverbindung zu nutzen.

Die dargestellten Funkübertragungssysteme stellen lediglich ein Beispiel dar, es können je nach Verfügbarkeit auch mehr oder weniger sein.

Alternativ kann der Rechner auch Teil der mobilen Sende/Empfangsstation 10 sein, wodurch die Sende-/Empfangsstation selbst die optimale Wahl für die zu verwendenden Funkübertragungssysteme durchführt. Dabei führt die Sende/Empfangsstation Signalisierungen und Empfangsmessungen durch, um die an einem Standort vorhandenen Funkübertragungssysteme zu identifizieren. Dann kann der Rechner anhand des Teilnehmerprofils das mindestens eine zu verwendende Funkübertragungssystem auswählen.

Im Teilnehmerprofil können auch weitere Daten enthalten sein, als es oben aufgeführt wurde.

## Patentansprüche

1. Verfahren zur Übertragung von ersten Daten mittels Funkübertragungssystemen zwischen Sende-/Empfangsstationen (3, 10), wobei mindestens zwei Funkübertragungssysteme gleichzeitig durch die Sende-/Empfangsstation (3, 10) empfangen werden, wobei ein Funkübertragungssystem mit mindestens einer Vorwärtsstrecke und mit mindestens einer Rückwärtsstrecke betrieben wird, wobei mindestens eine erste Sende-/Empfangsstation (10) mobil betrieben wird, wobei mittels des Funkübertragungssystems mit mindestens einer Vorwärtsstrecke und mindestens einer Rückwärtsstrecke eine Verbindung zwischen den Sende/Empfangsstationen (3, 10) aufgebaut wird, **dadurch gekennzeichnet, dass** ein Rechner in einer zweiten Sende-/Empfangsstation, die als Vermittlungseinrichtung (3) betrieben wird, betrieben wird, dass durch den Rechner eine zu übertragende Datenmenge nach dem Aufbau der Verbindung ermittelt wird, dass in Abhängigkeit von einem Teilnehmerprofil und der Übertragungsqualität ganz oder teilweise auf ein anderes Funkübertragungssystem mit der höchsten Übertragungsrate durch den Rechner umgeschaltet wird, wenn zu erwartende Kosten und/oder eine Geschwindigkeit der ersten Sende-/Empfangsstation (10) dies zulassen, wobei das Teilnehmerprofil zweite Daten über eine vom Teilnehmer geforderte Dienstgüte angibt, und dass Informationen über eine Übertragungsqualität und das Teilnehmerprofil von der ersten Sende-/Empfangsstation (10) zu dem Rechner übertragen werden.

2. Verfahren nach Anspruch 1, **dadurch gekennzeichnet, dass** die Übertragungsqualität anhand einer Signalfeldstärke und/oder einer Fehlerrate empfangener erster Daten ermittelt wird.

3. Verfahren nach Anspruch 1 oder 2, **dadurch gekennzeichnet, dass** der Standort der ersten Sende-/Empfangsstation (10) mittels einer Ortungsvorrichtung ermittelt wird..

4. Verfahren nach Anspruch 1, **dadurch gekennzeichnet, dass** die Geschwindigkeit der Sende/Empfangsstation (10) mittels Sensoren oder mittels der Funksignale ermittelt wird.

5. Rechner zur Zuordnung von Funkübertragungssystemen für eine Übertragung von Daten von einer Vermittlungseinrichtung (3) zu wenigstens einer mobilen Sende-/Empfangsstation (10),
wobei der Rechner in der Vermittlungseinrichtung (3) betrieben wird,
wobei die Vermittlungseinrichtung (3) mit einem Kommunikationsnetz (2) verbunden ist,
wobei der Rechner aus mindestens einem ersten und einem zweiten Funkübertragungssystem auswählt, die gleichzeitig zwischen der Vermittlungseinrichtung (3) und der wenigstens einen Sende/Empfangsstation (10) betrieben werden,
wobei das erste Funkübertragungssystem mit mindestens einer Vorwärtsstrecke und mit mindestens einer Rückwärtsstrecke betrieben wird,
wobei das zweite Funkübertragungssystem mit höherer Übertragungsrate als das erste Funkübertragungssystem zur wenigstens einen mobilen Sende-/Empfangsstation (10) hin betrieben wird,
wobei mittels des ersten Funkübertragungssystems eine Verbindung zwischen der Vermittlungseinheit (3) und der wenigstens einen mobilen Sende/Empfangseinheit (10) aufgebaut wird, über die von der wenigstens einen mobilen Sende-/Empfangsstation (10) ein Teilnehmerprofil zu der Vermittlungseinrichtung (3) übertragen wird,
**dadurch gekennzeichnet, dass**
der Rechner das Teilnehmerprofil empfängt, das Angaben beinhaltet über die zu übertragende Datenmenge der Daten, über die zur Übertragung der Daten geforderte Dienstgüte, über die zur Übertragung der Daten maximal zulässigen Kosten, sowie Informationen über den Standort und über die Geschwindigkeit der wenigstens einen mobilen Sende-/Empfangsstation (10) sowie darüber, welche Geräte die wenigstens eine mobile Sende-/Empfangsstation (10) aufweist,
und dass der Rechner zur Übertragung der Daten für die Übertragung der Daten ganz oder teilweise auf das zweite Funkübertragungssystem umschaltet,
wenn die wenigstens eine mobile Sende-/Empfangsstation (10) zum Empfang des zweiten Funkübertragungssystems ausgestattet ist, wenn die zu erwartenden Kosten des zweiten Funkübertragungssystems und die Geschwindigkeit sowie der Standort der wenigstens einen mobilen Sende-/Empfangsstation (10) dies zulassen und wenn die mögliche Übertragungsqualität der geforderten Dienstqualität entspricht.

## Claims

1. Method for transmission of first data by means of radio transmission systems between transmitting/receiving stations (3, 10), with at least two radio transmission systems being received by the transmitting/receiving station (3, 10) at the same time, with one radio transmission system being operated with at least one forward path and with at least one backward path, with at least one first transmitting/receiving station (10) being operated in a mobile form, with a connection being set up between the transmitting/receiving stations (3, 10) by means of the radio transmission system with at least one forward path and at least one backward path, **characterized in that** a computer is operated in a second transmitting/receiving station, which is operated as a switching device (3), **in that** the computer determines the amount of data to be transmitted after the connection has been set up, **in that** the computer switches entirely or partially to a different radio transmission system with the highest transmission rate as a function of a subscriber profile and the transmission quality when the costs to be expected and/or the speed of the first transmitting/receiving station (10) allow this, and with the subscriber profile indicating second data about a quality of service required by the subscriber, and **in that** information about the transmission quality and the subscriber profile is transmitted from the first transmitting/receiving station (10) to the computer.

2. Method according to Claim 1, **characterized in that** the transmission quality is determined on the basis of the signal field strength and/or the error rate of received first data.

3. Method according to Claim 1 or 2, **characterized in that** the location of the first transmitting/receiving station (10) is determined by means of position-finding apparatus.

4. Method according to Claim 1, **characterized in that** the speed of the transmitting/receiving station (10) is determined by means of sensors or by means of the radio signals.

5. Computer for allocation of radio transmission systems for transmission of data from a switching device (3) to at least one mobile transmitting/receiving station (10),
with the computer being operated in the switching device (3),
with the switching device (3) being connected to a communication network (2),
with the computer selecting from at least one first and one second radio transmission system which are operated at the same time between the switching device (3) and the at least one transmitting/receiving station (10),
with the first radio transmission system being operated with at least one forward path and with at least one backward path,
with the second radio transmission system being operated at a higher transmission rate than the first radio transmission system for at least one mobile transmitting/receiving station (10),
with a connection being set up by means of the first radio transmission system between the switching unit (3) and the at least one mobile transmitting/receiving unit (10), via which connection a subscriber profile is transmitted from the at least one mobile transmitting/receiving station (10) to the switching device (3),
**characterized in that**
the computer receives the subscriber profile which contains details about the amount of data to be transmitted, about the quality of service required for transmission of the data, about the maximum permissible costs for transmission of the data, as well as information about the location and about the speed of the at least one mobile transmitting/receiving station (10) as well as about the equipment which the at least one mobile transmitting/receiving station (10) has,
and **in that** the computer for transmission of the data switches entirely or partially to the second radio transmission system for the transmission of the data,
when the at least one mobile transmitting/receiving station (10) is equipped to receive the second radio transmission system, when the costs to be expected with the second radio transmission system and the speed as well as the location of the at least one mobile transmitting/receiving station (10) allow this, and when the possible transmission quality corresponds to the required quality of service.

## Revendications

1. Procédé de transmission de premières données à l'aide de systèmes de transmission radio entre des stations d'émission/réception (3, 10), au moins deux systèmes de transmission radio étant reçus simultanément par la station d'émission/réception (3, 10), un système de transmission radio étant exploité avec au moins un chemin aller et au moins un chemin retour, au moins une première station d'émission/réception (3, 10) étant exploitée de manière mobile, une connexion étant établie entre les stations d'émission/réception (10) à l'aide du système de transmission radio avec au moins un chemin aller et au moins un chemin retour,
**caractérisé en ce qu'**
on utilise un ordinateur dans une deuxième station d'émission/réception exploitée comme dispositif de commutation (3), une quantité de données à transmettre est déterminée par l'ordinateur après l'établissement de la connexion, l'ordinateur permet de commuter, en tout ou partie, sur un autre système de transmission radio avec le plus grand débit de transmission en fonction d'un profil d'abonné et de la qualité de transmission lorsque les coûts attendus et/ou une vitesse de la première station d'émission/réception (10) l'autorisent, le profil d'abonné indiquant des deuxièmes données concernant une qualité de service demandée par l'abonné, et les informations concernant la qualité de transmission et le profil d'abonné sont transmises de la première station d'émission/réception (10) vers l'ordinateur.

2. Procédé selon la revendication 1,
**caractérisé en ce que**
la qualité de transmission est déterminée à l'aide d'une intensité de champ du signal et/ou un taux d'erreur des premières données reçues.

3. Procédé selon la revendication 1 ou 2,
**caractérisé en ce que**
l'emplacement de la première station d'émission/réception (10) est déterminé à l'aide d'un dispositif de localisation.

4. Procédé selon la revendication 1,
**caractérisé en ce que**
la vitesse de la station d'émission/réception (10) est déterminée au moyen de capteurs ou de signaux radio.

5. Ordinateur destiné à l'assignation de systèmes de transmission radio pour une transmission de données d'un dispositif de commutation (3) vers au moins une station d'émission/réception mobile (10), l'ordinateur étant exploité dans le dispositif de commutation (3), le dispositif de commutation (3) étant relié à un réseau de communication (2), l'ordinateur sélectionnant entre au moins un premier et un deuxième système de transmission radio exploités simultanément entre le dispositif de commutation (3) et l'au moins une station d'émission/réception (10), le premier système de transmission radio étant exploité avec au moins un chemin aller et au moins un chemin retour, le deuxième système de transmission radio avec un débit de transmission plus rapide que le premier système de transmission radio étant exploité vers au moins une station d'émission/réception mobile (10), alors qu'une connexion établie entre l'unité de commutation (3) et l'au moins une station d'émission/réception (10) mobile à l'aide du premier système de transmission radio, permet de transmettre à partir de l'au moins une station d'émission/réception mobile (10) un profil d'abonné vers le dispositif de commutation (3),
**caractérisé en ce que**
l'ordinateur reçoit le profil d'abonné qui contient des indications concernant la quantité de données à transmettre, la qualité de service demandée pour la transmission des données, les coûts maximum autorisés pour la transmission des données, ainsi que des informations concernant l'emplacement et la vitesse de l'au moins une station d'émission/réception mobile (10), et concernant également les appareils présentés par l'au moins une station d'émission/réception mobile (10), et l'ordinateur destiné à la transmission de données permet de commuter, en tout ou partie, sur le deuxième système de transmission radio pour la transmission des données lorsque l'au moins une station d'émission/réception (10) mobile est équipée pour la réception du deuxième système de transmission radio, lorsque les coûts attendus du deuxième système de transmission radio et la vitesse ainsi que l'emplacement de l'au moins une station d'émission/réception (10) mobile l'autorisent, et lorsque la qualité de transmission possible correspond à la qualité de service demandée.
